**Europäisches Patentamt**

**European Patent Office**

**Office européen des brevets**

(19)

(11) **EP 1 179 727 A1**

(12) **EUROPÄISCHE PATENTANMELDUNG**

(43) Veröffentlichungstag:
**13.02.2002 Patentblatt 2002/07**

(51) Int Cl.⁷: **G01L 9/00**, G01L 7/08,
G01L 11/02, H01H 33/56

(21) Anmeldenummer: **00810696.5**

(22) Anmeldetag: **02.08.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **ABB RESEARCH LTD.**
**8050 Zürich (CH)**

(72) Erfinder:
• **Brändle, Hubert, Dr.**
**8102 Oberengstringen (CH)**
• **Bohnert, Klaus, Dr.**
**5452 Oberrohrdorf (CH)**

(74) Vertreter: **ABB Patent Attorneys**
**c/o ABB Business Services Ltd, Intellectual Property (SLE-I), Haselstrasse 16/699**
**5401 Baden (CH)**

(54) **Faser-Bragg-Gitter Sensor zur Druck- und Dichtemessung**

(57) Die vorliegende Erfindung hat einen Faser-Bragg-Gitter Sensor (1) zum Gegenstand, der insbesondere zur Messung von Gasdrücken p oder Gasdichten $\rho$ in gasisolierten Hochspannungsleitungen oder Schaltanlagen (14) geeignet ist. Das erfindungsgemässe Sensorprinzip beruht darauf, dass mit Hilfe einer flexiblen Membran (10), die eine ansonsten mit starren Wänden versehene Messdruckkammer (9a) begrenzt, ein isotroper Druck p eines Isoliergases (11) in eine longitudinale Faserdehnung oder Faserentlastung umgesetzt und über die Verschiebung der Bragg-Wellenlänge $\Delta\lambda_B$ mindestens eines Faser-Bragg-Gitters (3, 4) gemessen wird. Es werden Ausführungsbeispiele mit einer zusätzlichen Referenzdruckkammer (9b), mit zwei entgegengesetzt dehnungsempfindlichen Faser-Bragg-Gittern (3, 4), mit temperaturkompensierten Transducern (9) und mit mehreren Transducern (9) in Wellenlängenmultiplexkonfiguration angegeben. Aus einer Gasdruckabnahme $\Delta$p und einer absoluten Gastemperatur T sind eine Verringerung der Gasdichte $\rho$ und daraus ein Gasverlust detektierbar.

**FIG. 1a**

**Beschreibung**

**TECHNISCHES GEBIET**

Die vorliegende Erfindung bezieht sich auf das Gebiet der faseroptischen Druck- und Gasdichtemessung. Sie geht aus von einem faseroptischen Sensor nach dem Oberbegriff der Ansprüche 1 und 10.

**STAND DER TECHNIK**

Aus der WO 99/00652 ist ein faseroptischer Drucksensor gemäss Oberbegriff bekannt. Der Sensor besitzt einen Transducer oder ein Druckübertragungselement zur Umsetzung eines isotropen Flüssigkeitsdrucks in eine Längenänderung einer optischen Sensorfaser mit einem dehnungsempfindlichen Faser-Bragg-Gitter. Als Druckübertragungselement wird ein gebogenes Bourdonrohr offenbart, wobei die Sensorfaser zwischen einem freien, unter Druck beweglichen Ende des Bourdonrohrs und einem starren Verankerungsort befestigt ist. Mit einem druckunabhängig montierten Faser-Bragg-Gitter kann die Temperatur gemessen und der Temperaturgang der Druckmessung korrigiert werden. Zur inhärenten Temperaturkompensation wird eine Aufhängung zweier Faser-Bragg-Gitter mit entgegengesetzt gerichteten druckbedingten Längenänderungen vorgeschlagen. Aus dem Differenzsignal ist dann ein von Temperaturdrift befreites Drucksignal erhältlich. Ein wesentlicher Nachteil des Sensors besteht in seiner geringen Druckempfindlichkeit. Wegen der grossen Steifigkeit des Bourdonrohrs sind nur hohe Drücke messbar. Der Sensor ist zur Messung geringer Druckdifferenzen eher ungeeignet.

Die Wirkungsweise des Faser-Bragg-Gitters beruht darauf, dass ein Brechungsindexgitter, welches durch UV-Licht in eine Monomodefaser eingeschrieben ist, als Reflektor oder Transmissionsfilter mit einer charakteristischen Bragg-Wellenlänge $\lambda_B$ verwendet wird. Beim Dehnungssensor werden durch longitudinale Faserdehnungen die Gitterperiode und der Brechungsindex geändert und dadurch die Bragg-Wellenlänge $\lambda_B$ verschoben. Die Ausgangssignale sind daher wellenlängenkodiert und unabhängig von der empfangenen Lichtleistung. Serielles Multiplexen mehrerer Dehnungssensoren ist sehr einfach realisierbar, indem entlang einer Sensorfaser mehrere Faser-Bragg-Gitter mit unterschiedlichen Reflexionswellenlängen eingeschrieben sind, deren Signale spektral getrennt werden können. Neben diesem Wellenlängenmultiplexen ist auch Zeitmultiplexen zum individuellen Auslesen der Dehnungssensoren üblich.

Aus der WO 99/44026 ist ferner ein Faser-Bragg-Gitter Sensor bekannt, bei dem zur Umwandlung isotroper Drücke in Faserdehnungen die Faserhalterungen an Druckzylindern befestigt sind. Zur inhärenten Kompensation eines Temperaturgangs des optischen Dehnungssignals sind die Druckzylinder aus Materialien mit unterschiedlichen Ausdehnungskoeffizienten aufgebaut oder zusammengesetzt. Dabei sind die Faserhaltungen mit den Druckzylindern starr verbunden.

**DARSTELLUNG DER ERFINDUNG**

Aufgabe der vorliegenden Erfindung ist es, einen Faser-Bragg-Gitter Druck- oder Dichtesensor anzugeben, der eine hohe Messempfindlichkeit besitzt und besonders zur Messung geringer Druckdifferenzen und gegebenenfalls Gasdichteunterschiede in Fluiden geeignet ist. Diese Aufgabe wird erfindungsgemäss durch die Merkmale der Ansprüche 1 und 10 gelöst.

Durch die Erfindung wird ein faseroptischer Sensor angegeben, der zur Druck- oder Dichtemessung eines Fluids und insbesondere zur Messung von Gasdrücken p oder Gasdichten ρ in gasisolierten Anlagen geeignet ist. Der Sensor umfasst einen Transducer mit mindestens einer Druckkammer zur Aufnahme des Fluids und eine Sensorfaser mit mindestens einem Faser-Bragg-Gitter, das zwischen einer festen Verankerung und einem flexiblen Teil der Druckkammer montiert ist, sowie Auswertemittel zur Bestimmung eines Drucksignals Δp oder eines Gasdichtesignals Δρ aus einem optischen Dehnungssignal des Faser-Bragg-Gitters, wobei der flexible Teil eine Membran umfasst, die durch einen Messdruck p des Fluids deformierbar ist, und wobei ferner die Membran mit der Sensorfaser in einer kraftübertragenden Verbindung zur Umsetzung einer durch den Messdruck p induzierten Deformation der Membran in eine Längenänderung des Faser-Bragg-Gitters steht.

Durch die leichte Deformierbarkeit der Membran und die Ankopplung an eine Faser-Bragg-Gitter Sensorfaser wird ein sehr druck- oder gasdichteempfindlicher Transducer geschaffen. Das wellenlängenkodierte optische Signal kann frei von elektromagnetischen Störungen und über grosse Messdistanzen in einer Faser zur Auswerteeinheit übertragen werden. Der Sensor ist daher besonders für Umgebungen mit grossen elektromagnetischen Störungen oder mit weit beabstandeten Messstellen geeignet.

Ein erstes Ausführungsbeispiel betrifft eine Dichtemessung in einem gasförmigen Fluid. Der Sensor umfasst hierfür Mittel zur Gastemperaturmessung und die Auswertemittel sind zur Bestimmung des Gasdichtesignals aus dem Messdruck p und der Gastemperatur ausgestaltet. Der Zusammenhang zwischen Temperatur, Druck und Dichte kann je nach Gas auf eine an sich bekannte Weise durch eine ideale oder reale Gasgleichung gegeben sein. Insbesondere sind für ein näherungsweise ideales Gas ein absoluter Gasdruck und eine absolute Gastemperatur und aus deren Quotient eine Gasdichte bestimmbar.

In einem zweiten Ausführungsbeispiel bildet die Membran eine flexible, nach innen oder aussen deformierbare Wand der Messdruckkammer. Die übrigen Wände der Messdruckkammer sind starr, d. h. in Richtung ihrer Flächennormalen im wesentlichen nicht deformierbar. Dadurch werden Druckänderungen und gegebenenfalls Gasdichteänderungen effizient in Membrandeformationen umgesetzt.

In einem dritten Ausführungsbeispiel ist eine Halterung für die Sensorfaser an der Membran, vorzugsweise in einem Zentrumsbereich der Membran, befestigt. Für eine effiziente Umsetzung der Membranauslenkung in eine Faserdehnung soll die Sensorfaser senkrecht zur Membran angeordnet sein.

In einem vierten Ausführungsbeispiel weist die Sensorfaser auf jeder Seite der Membran ein zwischen der Membran und der festen Verankerung angeordnetes Faser-Bragg-Gitter auf, wobei die Messdruckkammer und gegebenenfalls eine Referenzdruckkammer entweder eine Öffnung zur Durchführung der Sensorfaser und zur Aufnahme der Halterung aufweisen und im Bereich der Öffnung durch einen zusammen mit der Membran auslenkbaren Faltenbalg gasdicht verschlossen sind oder die Messdruck- oder gegebenenfalls Referenzdruckkammer zur Aufnahme der Sensorfaser und dem mindestens einen Faser-Bragg-Gitter ausgestaltet sind. In dieser Konfiguration sind mit Hilfe der Auswertemittel ein temperaturunabhängiges Drucksignal aus einer Differenz und ein druckunabhängiges Temperatursignal aus einer Summe der Bragg-Wellenlängenverschiebungen der Faser-Bragg-Gitter bestimmbar.

In einem fünften Ausführungsbeispiel weist der Transducer zusätzlich eine Referenzdruckkammer zur Aufnahme eines Referenzfluids unter einem Referenzdruck $p_{ref}$ auf, wobei die Messdruckkammer und die Referenzdruckkammer durch die Membran getrennt sind. Die Auswertemittel können zur Bestimmung des Gasdichtesignals $\Delta\rho$ gemäss einer Gleichung $\Delta\rho = \Delta p/T$ ausgestaltet sein, wobei $\Delta p = p - p_{ref}$ ein Druckdifferenzsignal des Messdrucks $p$ und des Referenzdrucks $p_{ref}$ und T eine absolute Gastemperatur sind. Insbesondere ist ein Alarmgeber für einen Gasverlust vorhanden, der bei Überschreiten des Gasdichtesignals $\Delta\rho$ über einen kritischen Wert aktivierbar ist.

In einem sechsten Ausführungsbeispiel ist ein Sensorfasergehäuse mit Stützelementen für die Verankerung und für eine Druckkammer ausgestattet, wobei die Stützelemente zur Kompensation einer thermisch induzierten Verschiebung einer Bragg-Wellenlänge der Sensorfaser aus Materialien mit unterschiedlichen thermischen Ausdehnungskoeffizienten $\alpha_1$, $\alpha_2$ bestehen oder zusammengesetzt sind.

Ein weiterer Aspekt der Erfindung betrifft eine Verwendung des faseroptischen Sensors zur Messung von Gasdrücken p oder Gasdichten $\rho$ in gasisolierten Anlagen, wobei das Fluid ein elektrisches Isolationsgas und insbesondere $SF_6$ ist und die Messdruckkammer einen Anschluss zur Verbindung mit einem Kompartment der gasisolierten Anlage aufweist.

Ausführungsbeispiele betreffen die Wahl eines gleichen Isolationsgases unter einem den Betriebsbedingungen der gasisolierten Anlage entsprechenden Referenzdruck $p_{ref}$, einen Transducer mit einem gleichen Isolationsgas, eine Referenzdruckkammer mit gleicher thermischer Ausdehnung wie ein zu überwachender Gasraum, und eine Wellenlängen-und/oder Zeitmultiplexanordnung mehrerer Transducer zur Gasdichteüberwachung mehrerer abgeschotteter Gasräume einer solchen gasisolierten Anlage.

Weitere Ausführungen, Vorteile und Anwendungen der Erfindung ergeben sich aus den abhängigen Ansprüchen sowie aus der nun folgenden Beschreibung anhand der Figuren.

**KURZE BESCHREIBUNG DER ZEICHNUNGEN**

Es zeigen für einen erfindungsgemässen faseroptischen Druck- oder Gasdichtesensor:

Fig. 1a und 1b einen Transducer (Druckübertragungselement, Druckdose) mit deformierbarer Membran und Faser-Bragg-Gitter Sensorfaser zur Druck- oder Dichtemessung an einer gasisolierten Hochspannungsleitung;

Fig. 2 einen Transducer mit passiver Kompensation der Temperaturabhängigkeit der Bragg-Wellenlänge $\lambda_B$ des Faser-Bragg-Gitters;

Fig. 3 eine Multiplexanordnung von Transducern zur Gasdichtemessung in mehreren Kompartments der Hochspannungsleitung;

Fig. 4 eine Messapparatur für eine reflexive Multiplexanordnung von Transducern.

In den Figuren sind gleiche Teile mit gleichen Bezugszeichen versehen.

## WEGE ZUR AUSFÜHRUNG DER ERFINDUNG

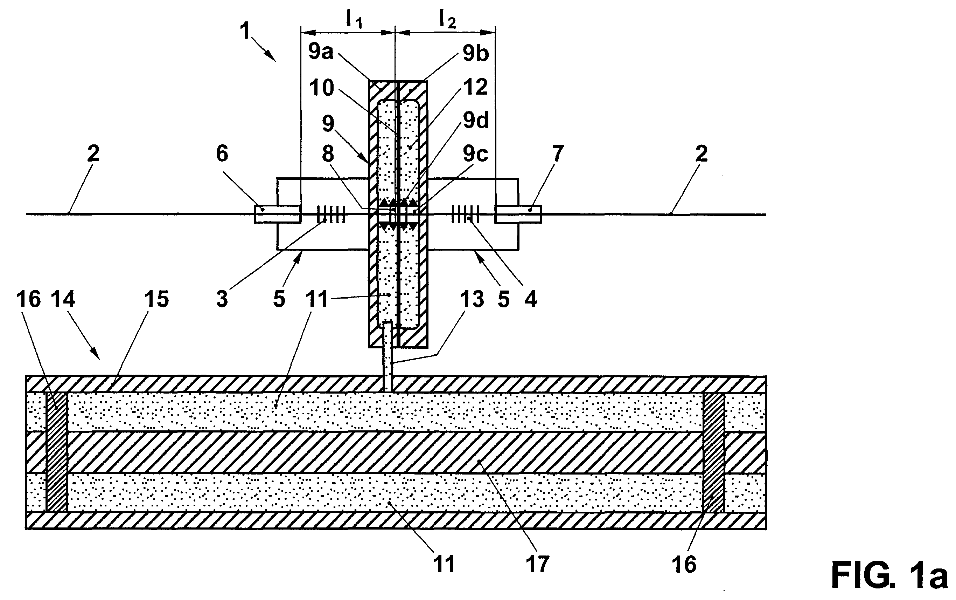

Fig. 1a zeigt ein Ausführungsbeispiel eines erfindungsgemässen Faser-Bragg-Gitter Sensors 1. Eine optische Faser 2 mit zwei Faser-Bragg-Gittern 3, 4 ist zwischen Faser-oder Ferrulhalterungen 6, 7, die an einem Sensorfasergehäuse 5 befestigt sind, und einer beweglichen Faser-oder Ferrulhalterung 8 vorgespannt. Die bewegliche Faserhalterung 8 steht mit einer Membran 10 in einer kraftübertragenden Verbindung. Die Membran 10 ist zusammen mit einem gasdichten, auslenkbaren Faltenbalg 9d Bestandteil eines Druckgehäuses 9 mit einer Messdruckkammer 9a und optional einer Referenzdruckkammer 9b. Die Messdruckkammer 9a kann über eine Gasaustauschleitung 13 an den Gasraum einer gasisolierten Anlage 14 angeschlossen sein. Beispielhaft ist eine gasisolierte Hochspannungsleitung 17 mit einer Kapselung 15 und durch Schottisolatoren 16 gebildeten Gasräumen oder Kompartments mit einem Isoliergas 11, vorzugsweise $SF_6$, dargestellt. Es kann sich ebenso um eine gasisolierte Schaltanlage 14 o. ä. handeln. Druck-oder Dichteschwankungen des $SF_6$ verursachen Deformationen der Membran 10 des Transducers 9 und damit Auslenkungen des Faltenbalgs 9d und der Faserhalterung 8, entsprechende Längenänderungen eines ersten Sensorfaserabschnitts der Länge $l_1$ mit dem Faser-Bragg-Gitter 3 und entgegengesetzt Längenänderungen eines zweiten Sensorfaserabschnitts der Länge $l_2$ mit dem Faser-Bragg-Gitter 4. Die Längenänderungen bewirken auf an sich bekannte Weise Verschiebungen $\Delta\lambda_1$, $\Delta\lambda_2$ der Bragg-Wellenlänge $\lambda_B$, die optisch auslesbar sind und damit näherungsweise druckproportionale optische Dehnungssignale darstellen.

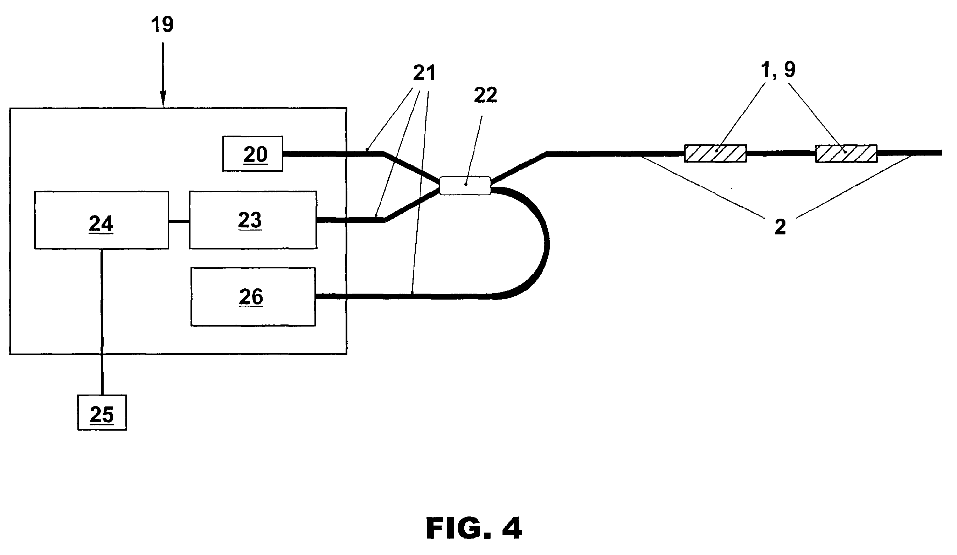

Die Referenzdruckkammer 9b ist von der Messdruckkammer 9a durch die Membran 10 getrennt. Dadurch sind die Membrandeformationen näherungsweise proportional zu einer Druckdifferenz $\Delta p = p - p_{ref}$, wobei p=Messdruck und $p_{ref}$=Referenzdruck. Desweiteren können Auswertemittel 19 (Fig. 4) so ausgestaltet sein, dass aus dem Dehnungs-oder Drucksignal durch zusätzliche Messung oder Approximation einer Gastemperatur ein Gasdichtesignal mit Hilfe einer idealen oder realen Gasgleichung bestimmbar ist.

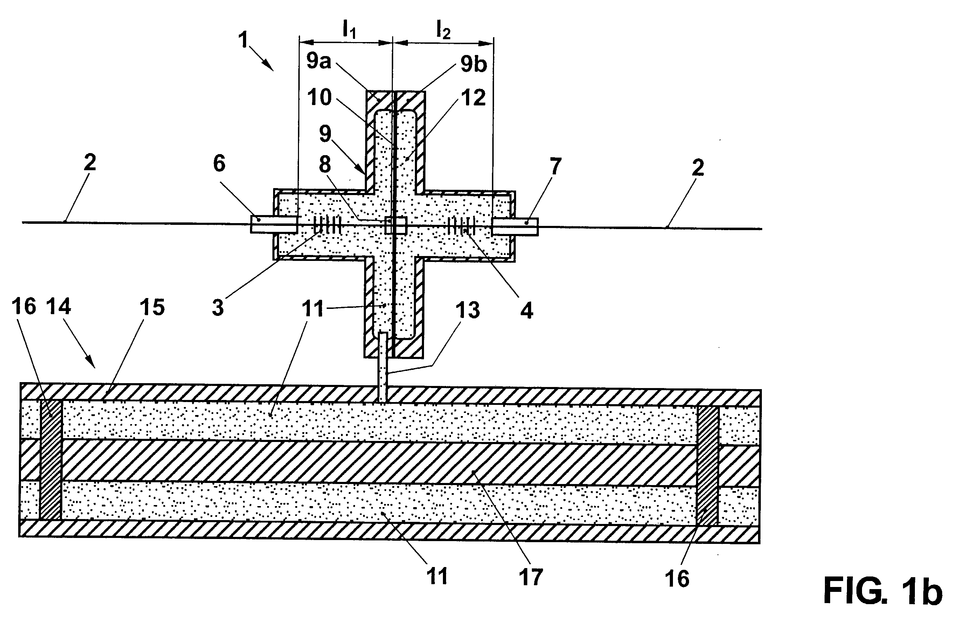

Im folgenden wird gezeigt, wie in einer Anordnung mit zwei Faser-Bragg-Gittern 3, 4 gemäss Fig. 1a oder Fig. 1b ein inhärent temperaturkompensiertes Drucksignal $\Delta p$ oder Dichtesignal $\Delta p$ und ein druckunabhängiges Temperatursignal $\Delta T$ gewonnen werden können. Für die Bragg-Wellenlängen Verschiebungen $\Delta\lambda_1$, $\Delta\lambda_2$ gelten die Gleichungen

$$\Delta\lambda_1 = a' \cdot (p - p_{ref}) + b' \cdot \Delta T \qquad \text{und} \tag{G1}$$

$$\Delta\lambda_2 = -a'' \cdot (p - p_{ref}) + b'' \cdot \Delta T \, , \tag{G2}$$

wobei a', a'' kalibrierbare Faserdehnungskoeffizienten sind und vorzugsweise $a'=a''=k_p$ gilt. Die kalibrierbaren Temperaturkoeffizienten b', b'' beschreiben die Temperaturabhängigkeit der Faser-Bragg-Gitter 3, 4 und der Faservorspannung aufgrund thermischer Ausdehnung der Sensorfaser 2 und der Halterungsvorrichtung 5, 6, 7, 8, 9 bei einer Temperaturänderung $\Delta T$. Bevorzugt gilt $b'=b''=k_T$.

Mit Vorteil sind das Referenzgas 11 identisch zu dem Messgas 11 und der Referenzdruck $p_{ref}$ identisch zu dem Sollwertdruck der gasisolierten Anlage 14 bei einer Sollwerttemperatur $T_0$ gewählt. Dadurch entspricht der Referenzdruck $p_{ref}$ unabhängig von der Betriebstemperatur dem vorgebbaren oder idealen Betriebsgasdruck der Anlage 14, sofern der Transducer 9 z. B. durch eine Wärmebrücke auf der gleichen Temperatur wie die Anlage 14 gehalten ist.

Für ein ideales Isoliergas 11 gelten die Gleichungen

$$p = c \cdot T + \Delta p \qquad \text{und} \tag{G3}$$

$$p_{ref} = c \cdot T \, , \tag{G4}$$

wobei c=eine Konstante proportional zur Gasdichte ist, und

$$\Delta p = (\Delta\lambda_1 - \Delta\lambda_2)/(2^*k_p) \, , \tag{G5}$$

$$\Delta T = (\Delta\lambda_1 + \Delta\lambda_2)/(2^*k_T) \qquad \text{und} \tag{G6}$$

$$\Delta\rho = k \cdot \Delta p \, / \, T, \qquad\qquad\qquad (G7)$$

wobei $\Delta p$=Druck- oder Druckänderungssignal, $\Delta T$=Temperatur-oder Temperaturänderungssignal, $\Delta\rho$=Gasdichte- oder Gasdichteänderungssignal, k=eine Konstante und T=absolute Gastemperatur. Die Differenzdruckmessung $\Delta p$ ist also in Kombination mit der Gastemperatur T ein Mass für die Abweichung $\Delta\rho$ der Dichte des Messgases 11 von einer vorgebbaren Sollwertgasdichte für die Anlage 14. Bei Überschreiten eines kritischen Werts des Gasdichtesignals $\Delta\rho$ soll ein nicht dargestellter Alarmgeber für einen Gasverlust in der zu überwachenden Anlage 14 aktivierbar sein.

Fig. 1b zeigt eine Variante, bei welcher die Sensorfaser 2 mit beiden Faser-Bragg-Gittern 3, 4 im Gasraum der Messdruckkammer 9a und der Referenzdruckkammer 9b gehaltert ist. In dieser Anordnung entfällt der Faltenbalg 9d.

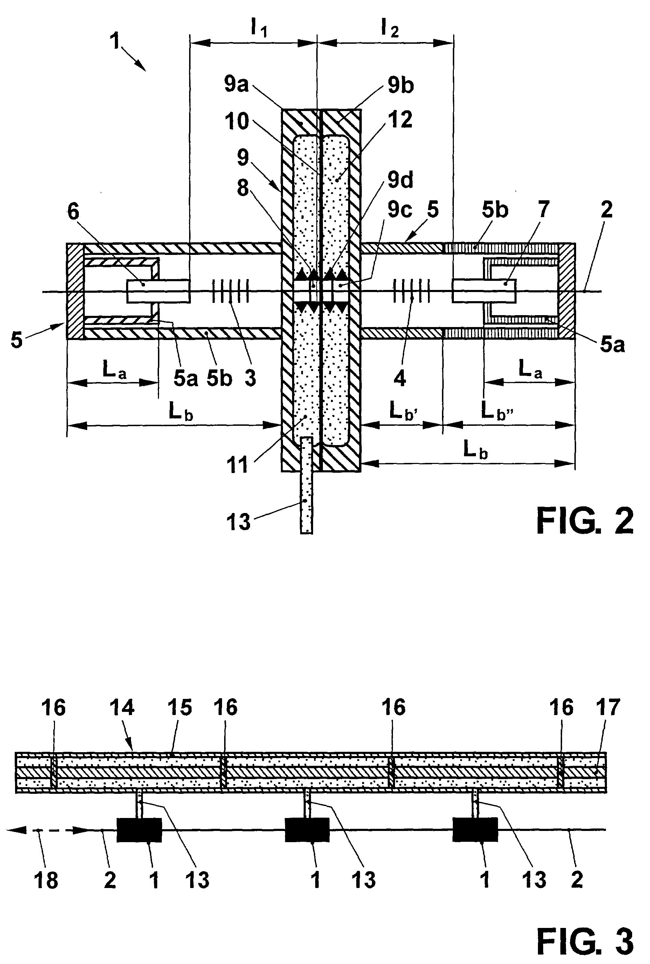

Der Sensor 1 gemäss Fig. 1a, 1b oder 2 kann auf verschiedene Weise vereinfacht werden. Bei Weglassen der Referenzdruckkammer 9b ist die Membran unmittelbar auf den Messdruck p, gegebenenfalls abzüglich des Atmosphärendrucks, empfindlich. Bei Verwendung nur eines Faser-Bragg-Gitters 3 kann u. U. die Faseraufhängung 8 und deren Befestigung an der Membran 10 vereinfacht sein. Insbesondere kann statt einer durchgehenden Sensorfaser 2 eine an der Membran 10 endende Sensorfaser 2 in Reflexion betrieben werden. Mit Vorteil ist die Halterung 8 in einem Zentrumsbereich der Membran 10 und insbesondere senkrecht zur Membran 10, d. h. weitgehend parallel zu einer Auslenkungsrichtung der Membran 10, angeordnet, um eine maximale Faserdehnung zu erhalten.

Fig. 2 zeigt eine inhärente Temperaturkompensation, die auf ein einzelnes oder, wie dargestellt, auf zwei Faser-Bragg-Gitter 3, 4 anwendbar ist. Hierbei sind die am Sensorgehäuse 5 fixierten Faserhalterungen oder Verankerungen 6, 7 an ersten Stützelementen 5a der Länge $L_a$ und die Messdruckkammer 9a und gegebenenfalls die Referenzdruckkammer 9b an zweiten Stützelementen 5b der Länge $L_b$ gehaltert. Erfindungsgemäss soll mindestens ein Stützelement aus Materialien mit unterschiedlichen thermischen Ausdehnungskoeffizienten $\alpha_1$, $\alpha_2$ bestehen oder zusammengesetzt sein, so dass eine differentielle thermische Ausdehnung zwischen den Halterungen 6, 7, 8 einer thermisch induzierten Verschiebung einer Bragg-Wellenlänge $\lambda_B$ der Sensorfaser 2 entgegenwirkt. Bei vollständiger Temperaturkompensation gilt im Fall der Fig. 2, linke Seite und bei Bragg-wellenlängen um 1550 nm die Gleichung

$$(\alpha_1 \cdot L_a - \alpha_2 \cdot L_b) \, / \, l_1 = 8{,}0 \cdot 10^{-6} \, {}^{\circ}C^{-1} \, . \qquad\qquad (G8)$$

Im Ausführungsbeispiel nach Fig. 2, rechte Seite ist das zweite Stützelement 5b aus Segmenten $L_b''$ mit $\alpha_1$ (wie Stützelement 5a) und $L_b'$ mit $\alpha_2$ aufgebaut. Die modifizierte Bedingung für die Temperaturkompensation lautet

$$(\alpha_1 \cdot L_a - (\alpha_1 \cdot L_b'' + \alpha_2 \cdot L_b')) \, / \, l_2 = 8{,}0 \cdot 10^{-6} \, {}^{\circ}C^{-1} \, . \qquad\qquad (G9)$$

Durch Wahl der Segmentlängen $L_b'$, $L_b''$ (mit $L_b'+L_b''=L_b$) kann also bei gegebenen Ausdehnungskoeffizienten $\alpha_1$, $\alpha_2$ die differentielle Ausdehnung der Stützelemente 5a, 5b massgeschneidert werden.

Eine weitere Sensorverbesserung besteht darin, dass Druckänderungen aufgrund thermischer Ausdehnungen des zu überwachenden Kompartments der Anlage 14 und/oder des Volumens $V_r$ der Referenzdruckkammer 9b dadurch passiv kompensiert werden, dass die relative Volumenänderung $(\Delta V/V)_{ref}$ der Referenzdruckkammer 9b gleich gross gewählt ist wie die relative Volumenänderung $(\Delta V/V)_K$ des Kompartments.

Fig. 3 zeigt eine Multiplexanordnung zum Auslesen mehrerer erfindungsgemässer Transducer 9 mit einer Sensorfaser 2. Die Messdruckkammer 9a jeden Transducers 9 steht über einen Anschluss 13 mit einem Kompartment einer gasisolierten Hochspannungsleitung 14 in Gasaustausch. Der faseroptische Anschluss 18 führt das optische Signal zu den in Fig. 4 dargestellten Auswertemitteln 19. Im Falle von Wellenlängenmultiplexen haben die Transducer 9 unterschiedliche Bragg-Wellenlängen $\lambda_B$. Die Transducer 9 sind mit einer Breitbandlichtquelle 20, z. B. einer LED oder SLD, und vorzugsweise über einen Faserkoppler 22 mit einem Wellenlängendemultiplexer 23 und einem Detektor plus Messelektronik 24 (und Computer 25) optisch verbunden. 26 bezeichnet eine optionale Lichtquelle für Referenzwellenlängen zur spektralen Kalibration der Faser-Bragg-Gitter 3, 4. Die Gitter haben ca. 0,2 nm spektrale Breite, 90% maximale Reflektivität und 15 mm Länge. Sie werden vorzugsweise mit einer 1550 nm Lichtquelle (50 nm Spektralbreite) ausgelesen. Die Transducer 9 können alternativ oder ergänzend auch im Zeitmultiplexverfahren und/oder mittels faseroptischer Schalter sequentiell nacheinander ausgelesen werden.

Insgesamt zeichnet sich der faseroptische Drucksensor 1 durch ein vorteilhaftes Zusammenwirken der druckempfindlichen Membran 10 mit dem mindestens einen sehr dehnungsempfindlichen Faser-Bragg-Gitter 3, 4 der Sensorfaser 2 aus. Dadurch sind Gasdichten mit grosser Messempfindlichkeit faseroptisch detektierbar. Faseroptische Multiplexanordnungen mit mehreren Transducern 9 sind besonders zur Überwachung gasisolierter Leitungen oder Schaltanlagen 14 mit einer Vielzahl abgeschotteter Gaskompartments und mit weit beabstandeten Messstellen geeignet.

**BEZUGSZEICHENLISTE**

| | |
|---|---|
| 1 | Faseroptischer Druck/Dichtesensor |
| 2 | optische Faser, Sensorfaser |
| 3, 4 | Faser-Bragg-Gitter |
| 5 | Sensorfasergehäuse |
| 5a, 5b | Stützer in Sensorfasergehäuse |
| 6, 7, 8 | Faserhalterungen, Ferrulhalterungen |
| 9 | Druckgehäuse, Transducer |
| 9a, 9b | Druckkammern |
| 9c | Öffnung |
| 9d | Faltenbalg |
| 10 | Membran |
| 11 | Isolationsgas, $SF_6$ |
| 12 | Referenzgas, $SF_6$ |
| 13 | Anschluss, Gasaustauschleitung |
| 14 | gasisolierte Hochspannungsleitung, Schaltanlage |
| 15 | Kapselung |
| 16 | Schottisolatoren |
| 17 | Hochspannungsleiter |
| 18 | (faseroptischer) Anschluss an Auswerteeinheit |
| 19 | Auswertemittel |
| 20 | (Breitband-)Lichtquelle, LED, SLD |
| 21 | Zuleitungsfasern |
| 22 | Koppler, Faserkoppler |
| 23 | Wellenlängendemultiplexer, (abstimmbares) Spektralfilter, Fabry-Perot Filter |
| 24 | Detektor und Messelektronik |
| 25 | Computer, PC |
| 26 | Lichtquelle für Referenzwellenlängen |
| $k_p, k_T$ | Konstanten |
| $l_1, l_2$ | Länge der Dehnungsstrecken der Sensorfaser |
| $\lambda_B$ | Bragg-Wellenlänge |
| $\Delta\lambda_1, \Delta\lambda_2$ | Bragg-Wellenlängenverschiebung |
| p | Messdruck |
| $p_{ref}$ | Referenzdruck |
| $\Delta p$ | Drucksignal, Differenzdrucksignal |
| T | absolute Gastemperatur |
| $\Delta T$ | Druckdifferenz |
| $(\Delta V/V)_{ref}, (\Delta V/V)_K$ | relative Volumenänderungen |

**Patentansprüche**

1. Faseroptischer Sensor (1) zur Druck- oder Dichtemessung eines Fluids (11), insbesondere zur Messung von Gasdrücken p oder Gasdichten ρ in gasisolierten Anlagen (14), umfassend einen Transducer (9) mit mindestens einer Messdruckkammer (9a) zur Aufnahme des Fluids (11) und eine Sensorfaser (2) mit mindestens einem Faser-Bragg-Gitter (3, 4), das zwischen einer festen Verankerung (6, 7) und einem flexiblen Teil (10) der Druckkammer (9a) montiert ist, ferner umfassend Auswertemittel (19) zur Bestimmung eines Drucksignals Δp oder eines Gasdichtesignals Δρ aus einem optischen Dehnungssignal des Faser-Bragg-Gitters (3, 4), **dadurch gekennzeichnet, dass**

   a) der flexible Teil (10) eine Membran (10) umfasst, die durch einen Messdruck p des Fluids (11) deformierbar ist und

b) die Membran (10) mit der Sensorfaser (2) in einer kraftübertragenden Verbindung zur Umsetzung einer durch den Messdruck p induzierten Deformation der Membran (10) in eine Längenänderung des Faser-Bragg-Gitters (3, 4) steht.

2. Faseroptischer Sensor (1) nach Anspruch 1, **dadurch gekennzeichnet, dass** für ein gasförmiges Fluid (11)

a) der Sensor (1) Mittel zur Messung einer Gastemperatur umfasst und
b) die Auswertemittel (19) zur Bestimmung des Gasdichtesignals $\Delta\rho$ aus dem Messdruck p und der Gastemperatur ausgestaltet sind.

3. Faseroptischer Sensor (1) nach einem der vorangehenden Ansprüche, **dadurch gekennzeichnet, dass**

a) die Membran (10) eine flexible Wand der Messdruckkammer (9a) bildet und
b) die übrigen Wände der Messdruckkammer (9a) starre Wände sind.

4. Faseroptischer Sensor (1) nach einem der vorangehenden Ansprüche, **dadurch gekennzeichnet, dass**

a) eine Halterung (8) für die Sensorfaser (2) an der Membran (10), vorzugsweise in einem Zentrumsbereich (9c) der Membran (10), befestigt ist und
b) insbesondere dass die Sensorfaser (2) senkrecht zur Membran (10) angeordnet ist.

5. Faseroptischer Sensor (1) nach Anspruch 4, **dadurch gekennzeichnet, dass** die Messdruckkammer (9a) und gegebenenfalls eine Referenzdruckkammer (9b)

a) eine Öffnung (9c) zur Durchführung der Sensorfaser (2) und zur Aufnahme der Halterung (8) aufweist oder aufweisen und im Bereich der Öffnung (9c) durch einen zusammen mit der Membran (10) auslenkbaren Faltenbalg (9d) gasdicht verschlossen ist oder sind oder
b) zur Aufnahme der Sensorfaser (2) und dem mindestens einen Faser-Bragg-Gitter (3, 4) ausgestaltet ist oder sind und
c) die Sensorfaser (2) auf jeder Seite der Membran (10) ein zwischen der Membran (10) und der festen Verankerung (6, 7) angeordnetes Faser-Bragg-Gitter (3, 4) aufweist.

6. Faseroptischer Sensor (1) nach Anspruch 5, **dadurch gekennzeichnet, dass**

a) die Auswertemittel (19) zur Bestimmung des Drucksignals $\Delta p$ aus einer Differenz und eines Temperatursignals $\Delta T$ aus einer Summe der optischen Dehnungssignale der Faser-Bragg-Gitter (3, 4) ausgestaltet sind und
b) insbesondere dass das Drucksignal $\Delta p$ gemäss einer Gleichung $\Delta p=(\Delta\lambda_1-\Delta\lambda_2) / (2*k_p)$ und das Temperatursignal $\Delta T$ gemäss einer Gleichung $\Delta T=(\Delta\lambda_1+\Delta\lambda_2)/(2*k_T)$ bestimmbar sind, wobei $\Delta\lambda_1$, $\Delta\lambda_2$=Bragg-Wellenlängenverschiebungen der Faser-Bragg-Gitter (3, 4) und $k_p$, $k_T$=Konstanten sind.

7. Faseroptischer Sensor (1) nach einem der vorangehenden Ansprüche, **dadurch gekennzeichnet, dass**

a) der Transducer (9) zusätzlich eine Referenzdruckkammer (9b) zur Aufnahme eines Referenzfluids (12) unter einem Referenzdruck $p_{ref}$ aufweist,
b) die Messdruckkammer (9a) und die Referenzdruckkammer (9b) durch die Membran (10) getrennt sind und
c) insbesondere dass das Drucksignal ein Druckdifferenzsignal $\Delta p=p-p_{ref}$ des Messdrucks p und des Referenzdrucks $p_{ref}$ ist.

8. Faseroptischer Sensor (1) nach Anspruch 7, **dadurch gekennzeichnet, dass** für gasförmige Fluide (11, 12)

a) die Auswertemittel (19) zur Bestimmung des Gasdichtesignals $\Delta\rho$ gemäss einer Gleichung $\Delta\rho=k\cdot\Delta p/T$ ausgestaltet sind, wobei $\Delta p=p-p_{ref}$ ein Druckdifferenzsignal des Messdrucks p und des Referenzdrucks $p_{ref}$, k=eine Konstante und T eine absolute Gastemperatur sind und
b) insbesondere dass ein Alarmgeber für einen Gasverlust vorhanden ist, der bei Überschreiten des Gasdichtesignals $\Delta\rho$ über einen kritischen Wert aktivierbar ist.

9. Faseroptischer Sensor (1) nach einem der vorangehenden Ansprüche, **dadurch gekennzeichnet, dass**

a) ein Sensorfasergehäuse (5) zur Montage des mindestens einen Faser-Bragg-Gitters (3, 4) mit einem ersten Stützelement (5a) für die Verankerung (6, 7) und mit einem zweiten Stützelement (5b) für die Messdruckkammer (9a) oder eine Referenzdruckkammer (9b) ausgestattet ist,

b) die Stützelemente (5a, 5b) aus Materialien mit unterschiedlichen thermischen Ausdehnungskoeffizienten $\alpha_1$, $\alpha_2$ bestehen oder zusammengesetzt sind, so dass eine differentielle thermische Ausdehnung zwischen der Verankerung (6, 7) und der Druckkammer (9a, 9b) einer thermisch induzierten Verschiebung einer Bragg-Wellenlänge ($\lambda_B$) der Sensorfaser (2) entgegenwirkt und

c) insbesondere ein Stützelement (5a) aus mindestens zwei Segmenten mit unterschiedlichen thermischen Ausdehnungskoeffizienten $\alpha_1$, $\alpha_2$ und vorgebbaren Längen $L_b'$, $L_b''$ zusammengesetzt ist.

**10.** Verwendung des faseroptischen Sensors (1) gemäss einem der vorangehenden Ansprüche zur Messung von Gasdrücken p oder Gasdichten $\rho$ in gasisolierten Anlagen (14), **dadurch gekennzeichnet, dass**

a) das Fluid (11) ein Isolationsgas (11) für gasisolierte Anlagen (14) und insbesondere $SF_6$ ist und

b) die Messdruckkammer (9a) einen Anschluss (13) zur Verbindung mit einem Kompartment der gasisolierten Anlage (14) aufweist.

**11.** Verwendung nach Anspruch 10, **dadurch gekennzeichnet, dass**

a) das Referenzfluid (12) das gleiche Isolationsgas (12) wie das Fluid (11) ist,

b) für das Referenzfluid (12) ein Referenzdruck $p_{ref}$ vorgegeben ist, der einem Sollwertdruck der gasisolierten Anlage (14) bei einer Sollwerttemperatur $T_0$ entspricht und

c) insbesondere dass die Referenzdruckkammer (9b) so ausgelegt ist, dass ihre relative Volumenänderung $(\Delta V/V)_{ref}$ gleich einer relativen Volumenänderung $(\Delta V/V)_K$ eines zu überwachenden Kompartments der gasisolierten Anlage (14) ist.

**12.** Verwendung nach einem der Ansprüche 10-11, **dadurch gekennzeichnet, dass**

a) mehrere Transducer (9) zur Gasdichteüberwachung mehrerer Kompartments einer gasisolierten Anlage (14) in einer Wellenlängen- und/oder Zeitmultiplexanordnung miteinander in optischer Verbindung stehen und

b) insbesondere dass mehrere Transducer (9) unterschiedlicher Bragg-Wellenlänge $\lambda_B$ mit einer Breitbandlichtquelle (20) und vorzugsweise über einen Faserkoppler (22) mit einem Wellenlängendemultiplexer (23) und einem Detektor plus Messelektronik (24) in optischer Verbindung stehen.

FIG. 1a

FIG. 1b

EP 1 179 727 A1

**FIG. 2**

**FIG. 3**

**FIG. 4**

**Europäisches Patentamt**

# EUROPÄISCHER RECHERCHENBERICHT

Nummer der Anmeldung

EP 00 81 0696

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 008 840 A (GLOTZL EUROP SENSORS N V ;CEA ETABLISSEMENT PUBLIC A CAR (FR)) 14. Juni 2000 (2000-06-14) | 1,3,4,7 | G01L9/00 G01L7/08 G01L11/02 |
| Y | * das ganze Dokument * | 2,10-12 | H01H33/56 |
| | --- | | |
| Y | EP 1 014 522 A (ALSTOM) 28. Juni 2000 (2000-06-28) | 2 | |
| A | * das ganze Dokument * | 6,8,10 | |
| | --- | | |
| Y | PATENT ABSTRACTS OF JAPAN vol. 004, no. 100 (P-019), 18. Juli 1980 (1980-07-18) & JP 55 058430 A (TOSHIBA CORP), 1. Mai 1980 (1980-05-01) | 2 | |
| A | * Zusammenfassung * | 10 | |
| | --- | | |
| D,A | WO 99 44026 A (BODOR PATRICK ;BOHNERT KLAUS (CH); BRAENDLE HUBERT (CH); ABB RESEA) 2. September 1999 (1999-09-02) * Zusammenfassung * | 1 | |
| | --- | | **RECHERCHIERTE SACHGEBIETE (Int.Cl.7)** |
| D,A | WO 99 00652 A (CIDRA CORP) 7. Januar 1999 (1999-01-07) * Zusammenfassung * | 1 | G01L H01H |
| | --- | | |
| A | WO 00 37914 A (CIDRA CORP) 29. Juni 2000 (2000-06-29) * Seite 19, Zeile 22 - Seite 20, Zeile 17; Abbildung 6 * * Seite 29, Zeile 13 - Zeile 22; Abbildung 16 * | 1,4,5 | |
| Y | * Seite 31, Zeile 17 - Zeile 23; Abbildung 21 * | 12 | |
| | --- | | |
| A | WO 99 13307 A (CIDRA CORP) 18. März 1999 (1999-03-18) * Seite 10, Zeile 24 - Seite 12, Zeile 19; Abbildungen 2,3 * | 1,4,5 | |
| | --- | | |

-/--

~~Der vorliegende Recherchenbericht wurde für alle Patentansprüche erstellt~~

| Recherchenort | Abschlußdatum der Recherche | Prüfer |
|---|---|---|
| MÜNCHEN | 14. Februar 2001 | Gerken, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches**

**Patentamt**

Nummer der Anmeldung

EP 00 81 0696

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☒ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

1-8,10-12

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches Patentamt**

# EUROPÄISCHER RECHERCHENBERICHT

Nummer der Anmeldung

EP 00 81 0696

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 4 899 046 A (WRIGHT OLIVER ET AL) 6. Februar 1990 (1990-02-06) * Zusammenfassung; Abbildung 1A * --- | 1,4,5 | |
| Y | PATENT ABSTRACTS OF JAPAN vol. 017, no. 302 (P-1553), 10. Juni 1993 (1993-06-10) & JP 05 026750 A (SUMITOMO ELECTRIC IND LTD), 2. Februar 1993 (1993-02-02) * Zusammenfassung * --- | 10,12 | |
| Y | DE 29 26 260 A (BBC BROWN BOVERI & CIE) 8. Januar 1981 (1981-01-08) * das ganze Dokument * ----- | 11 | |

RECHERCHIERTE SACHGEBIETE (Int.Cl.7)

~~Der vorliegende Recherchenbericht wurde für alle Patentansprüche erstellt~~

| Recherchenort | Abschlußdatum der Recherche | Prüfer |
|---|---|---|
| MÜNCHEN | 14. Februar 2001 | Gerken, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches
Patentamt**

Nummer der Anmeldung

EP 00 81 0696

**MANGELNDE EINHEITLICHKEIT
DER ERFINDUNG
ERGÄNZUNGSBLATT B**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-4,6-8

   Ein faseroptischer Sensor zur umfaßt zusätzlich zu Mitteln zur Messung des Druck p eines Fluids noch Mittel zur Messung einer Gastemperatur und Auswertemittel zur Bestimmung eines Gasdichtesignals aus dem Messdruck p und der Gastemperatur unter Verwendung spezieller mathematischer Zusammenhänge.

2. Anspruch : 5

   Die Meßdruckkammer weist eine Öffnung bzw. Öffnungen zur Durchführung der Sensorfaser und zur Aufnahme von Halterungen auf, wobei die Öffnung(en) durch einen Faltenbalg gasdicht verschlossen sind oder zur Aufnahme der Sonsorfaser und dem Faser-Bragg-Gitter ausgestaltet sind und die Sensorfaser auf jeder Seite der Membran ein zwischen der Membran und der festen Verankerung angeordnetes Faser-Bragg-Gitter aufweist.

3. Anspruch : 9

   Innerhalb eines Sensorfasergehäuses sind Stützelemente für die Verankerung der Faser vorgesehen, wobei die Stützelemente aus Materialien mit unterschiedlichen thermischen Ausdehnungskoeffizienten bestehen oder zusammengesetzt sind, derart, daß eine differentielle thermische Ausdehnung der Stützelemente einer thermisch induzierten Verschiebung der Bragg-Wellenlänge der Sensorfaser entgegenwirkt.

4. Ansprüche: 10-12

   Der faseroptische Sensor wird zur Messung von Gasdrücken oder Gasdichten in gasisolierten Anlagen verwendet, wobei das Fluid für die Meßdruckkammer ein Isolationsgas ist und bei Verwendung einer Referenzdruckkammer in beiden Kammern das gleiche Isolationsgas vorhanden ist.

## ANHANG ZUM EUROPÄISCHEN RECHERCHENBERICHT
## ÜBER DIE EUROPÄISCHE PATENTANMELDUNG NR.

EP 00 81 0696

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-02-2001

| Im Recherchenbericht angeführtes Patentdokument | | Datum der Veröffentlichung | Mitglied(er) der Patentfamilie | | Datum der Veröffentlichung |
|---|---|---|---|---|---|
| EP 1008840 | A | 14-06-2000 | BE | 1012332 A | 05-09-2000 |
| EP 1014522 | A | 28-06-2000 | FR | 2787571 A | 23-06-2000 |
| | | | JP | 2000283906 A | 13-10-2000 |
| JP 55058430 | A | 01-05-1980 | KEINE | | |
| WO 9944026 | A | 02-09-1999 | DE | 19808222 A | 02-09-1999 |
| | | | AU | 3244099 A | 15-09-1999 |
| | | | BR | 9908314 A | 07-11-2000 |
| | | | EP | 1058822 A | 13-12-2000 |
| | | | NO | 20004276 A | 18-10-2000 |
| WO 9900652 | A | 07-01-1999 | US | 5877426 A | 02-03-1999 |
| | | | AU | 8167098 A | 19-01-1999 |
| | | | EP | 0922207 A | 16-06-1999 |
| | | | NO | 990876 A | 08-04-1999 |
| WO 0037914 | A | 29-06-2000 | AU | 3996400 A | 12-07-2000 |
| WO 9913307 | A | 18-03-1999 | US | 6016702 A | 25-01-2000 |
| | | | AU | 8925198 A | 29-03-1999 |
| | | | EP | 1012553 A | 28-06-2000 |
| | | | NO | 20001161 A | 08-05-2000 |
| US 4899046 | A | 06-02-1990 | FR | 2592154 A | 26-06-1987 |
| | | | FR | 2602865 A | 19-02-1988 |
| | | | EP | 0227556 A | 01-07-1987 |
| JP 05026750 | A | 02-02-1993 | KEINE | | |
| DE 2926260 | A | 08-01-1981 | KEINE | | |

EPO FORM P0461

Für nähere Einzelheiten zu diesem Anhang : siehe Amtsblatt des Europäischen Patentamts, Nr.12/82